# EUROPEAN PATENT APPLICATION

(11) **EP 4 671 709 A1**
(43) Date of publication of application: **31.12.2025**
(21) Application number: 24184349.9
(22) Date of filing: 25.06.2024
(51) Int. Cl.: G01J 3/44, G01N 21/65, G02B 5/06, G01J 3/02

(54) **RAMAN SPECTROSCOPY DEVICE AND METHOD OF PERFORMING RAMAN SPECTROSCOPY ON A SAMPLE**

(71) Applicant: Serstech AB, 227 64 Lund (SE)
(72) Inventor: BILLSTEN, Peter, 247 63 Veberöd (SE); VAINORIUS, Neimantas, 226 54 Lund (SE)
(74) Representative: Lind Edlund Kenamets Intellectual Property AB

(57) **Abstract**

The present invention relates to a Raman spectroscopy device (100). The device (100) comprises, a housing (150), a controller (160) arranged in the housing (150), a light source (110) arranged in the housing (150), a spectrometer (122) arranged in the housing (150), and an optical system (140) arranged in the housing (150) and configured to direct light (104) emitted by the light source (110) through an aperture (152) of the housing (150) to form a beam spot (BS) on a sample (102), and to direct light (106) received from the sample (102) via the aperture (152) to the spectrometer (122) via at least one light source rejection component (113, 114). The optical system (140) comprises at least one actuatable component (142) configured to control a location (L) of the beam spot (BS) on the sample (102). The controller (160) is configured to, during a measurement sequence, cause the at least one actuatable component (142) to translate the beam spot (BS) between a set of locations (L) on the sample (102) so as to obtain a measurement from each one of the set of locations (L) on the sample (102).

## Description

### Technical Field

The invention relates to the field of Raman spectroscopy. More particularly, it is related to a Raman spectroscopy device and a method of performing Raman spectroscopy on a sample using such a Raman spectroscopy device. The Raman spectroscopy device has a light source and a spectrometer arranged in a housing.

### Background Art

To detect and to determine different substances is highly desired in a large variety of applications ranging from chemical analysis to in-field determination of potentially hazardous and toxic substances. In many situations a correct determination of a substance is of utmost importance. For instance, to be able to determine if a substance is hazardous, e.g. explosive, or not is critical since it may otherwise result in severe consequences with personnel injuries and material losses. Similarly, it may also be critical to determine if a substance is toxic or not since a wrongful determination may result in serious consequences involving personnel and environmental risks. Further, it is important to verify that a drug is correctly synthesized since an incorrectly synthesized drug may become harmful instead of curative for a subject.

A common approach to investigate properties of a substance is to let the substance undergo a chemical analysis. A chemical analysis of a substance is often accurate but is typically complex and time consuming. Moreover, chemical analysis often require that various further substances or analytes are used in the analysis. Such analysis therefore tends to become costly and time consuming. Another drawback resides in that such analyses generally are too complicated and time consuming to be conducted under field conditions.

Another commonly used approach for detecting and identifying different substances is to use some form of spectroscopic analysis. A common type of spectroscopic analysis used is optical spectroscopy where light having interacted with the substance in question is analyzed using a spectrometer. The light interacting with the substance is scattered by the substance resulting in that the scattered light is affected by the substance. Such scattering from a substance can either be elastic or inelastic. Elastically scattered photons exhibit the same energy as photons impinging on the substance at hand. Inelastically scattered photons, on the other hand, exhibit a different energy as compared to photons impinging on the substance at hand. Inelastically scattered photons therefore either gain or lose energy.

Both elastically and inelastically scattered photons may be used in spectroscopic analyses of substances. When looking at elastically scattered photons certain properties of the substance may be determined. However, when it comes to determining a certain substance more sophisticated spectroscopic techniques also relying on inelastically scattered photons are generally required.

Raman spectroscopy is a spectroscopic technique relying on inelastic scattering of photons, known as Raman scattering. In Raman spectroscopy a source of monochromatic light, usually a laser, is used. The light source may emit light in the visible, near infrared, or near ultraviolet range, although X-rays can also be used. The laser light interacts with molecular vibrations, phonons, or other excitations in the molecular system, resulting in that the energy of the laser photons being shifted up or down in the inelastically scattered light thereof. The shift in energy gives information about the vibrational modes in the molecular system at hand. In other words, inelastically scattered light from the molecules of the substance at hand gives rise to a vibrational spectrum that includes of a series of lines or peaks constituting a molecular "fingerprint" for the substance. Hence a substance or material will give rise to a unique Raman spectrum, i.e. its "fingerprint". The unique Raman spectrum makes Raman spectroscopy suitable for identifying or determining substances or materials. In many fields of technology Raman spectroscopy is a well-established spectroscopic technique for rapid identification of substances and chemicals with high degree of accuracy.

A typical Raman spectrum of a substance illustrates the shift of Raman wavelengths relative to elastically scattered light, typically referred to as Rayleigh-scattered light. The Rayleigh-scattered light has the same wavelength as the incident light (i.e., the light emitted by the light source) whereas the Raman wavelengths are shifted up or down relative to the Rayleigh-scattered light. The vertical axis of a Raman spectrum typically represents the intensity of the Raman wavelengths and yields the concentration of the chemical components of the sample or substance, whereas the horizontal axis of a Raman spectrum typically represents the wavelength shift in relation to the Rayleigh-scattered light.

The light from Raman scattering is typically associated with weak intensities and may be difficult to observe without intense monochromatic excitation and a sensitive detector. Typically, 1 out of 10⁶ - 10⁹ photons scattered by a sample is a photon relating to a Raman scattering. Modern technical development of lasers, detectors, and optical components as well as continued miniaturization of electronic components have made it possible to produce fast and reliable portable Raman instruments which are suitable to use under field conditions.

However, such portable Raman instruments measure on a very small fraction of the sample. In practice, portable Raman instruments measure on a small sample area defined by the intense laser light exiting the instrument meaning that the overall composition of the sample may sometimes be overlooked.

### Summary

With the above in mind, it is an objective of the present invention to provide an improved Raman spectroscopy device as well as an improved method of performing Raman spectroscopy on a sample using such a device.

Another objective is to provide such a device which is capable of analyzing a larger fraction of the sample.

Another objective is to provide such a device which is capable of determining the presence of one or more target substances in a sample.

Another objective is to provide such a device which is capable of determining the presence of one or more target substances in a diluted sample.

Another objective is to provide such a device which is capable of determining the presence of one or more target substances in a sample including one or more filler components.

Another objective is to provide such a device which is capable of determining the presence of one or more illicit substances in a diluted sample.

Another objective is to provide such a device which is capable of determining the composition of a sample more accurately.

Another objective is to provide such a device which is capable of determining the composition of a pharmaceutical sample.

Another objective is to provide such a device which is safe to use.

Another objective is to provide such a device which is cost-effective.

To achieve at least one of the above objects and also other objects that will be evident from the following description, a Raman spectroscopy device, having the features defined in claim 1 is provided according to the present inventive concept. A method of performing Raman spectroscopy on a sample using such a device is provided according to claim 11.

More specifically, according to a first aspect, there is provided Raman spectroscopy device comprising:
a housing,
a controller arranged in the housing,
a light source arranged in the housing,
a spectrometer arranged in the housing, and
an optical system arranged in the housing and configured to direct light emitted by the light source through an aperture of the housing to form a beam spot on a sample, and to direct light received from the sample via the aperture to the spectrometer via at least one light source rejection component,
   wherein the optical system comprises at least one actuatable component configured to control a location of the beam spot on the sample, wherein the controller is configured to, during a measurement sequence, cause the at least one actuatable component to translate the beam spot between a set of locations on the sample so as to obtain a measurement from each one of the set of locations on the sample.

Hereby an improved Raman spectroscopy device is provided.

It should be noted that within the context of this application the term "light source rejection component" may mean any type of component which is capable of separating Raman scattered light form Rayleigh scattered light. Thus, the light source rejection component may mean any type of component which is capable of blocking light having wavelengths corresponding to or being close to a wavelength of the light source while being capable of transmitting light having wavelengths other than the wavelength of the light source. Such separation of Raman scattered light form Rayleigh scattered light may not be complete, e.g. meaning that a minor portion of Rayleigh scattered light may be transmitted through a light source rejection component. To this end, the light source rejection component may for example include an interference filter, a dichroic mirror, a notch filter, a band stop filter or an edge filter.

It should be noted that within the context of this application the term "measurement sequence" may mean any sequence or series of measurements carried out on a sample. Such a measurement sequence may include two or more measurements on the sample.

It should be noted that within the context of this application the term "a set of locations on the sample" may mean any set of locations including two or more locations on the sample. Thus, such a set of locations on the sample may include any number of locations on the sample. Further, the beam spot may, during a measurement sequence, be translated or moved to locations not included in the set of locations. In other words, the beam spot may, during a measurement sequence, be translated to locations included in the set of locations and to locations not included in the set of locations. In such a case, a measurement is obtained from each one of the set of locations on the sample. Put differently, the beam spot may, during a measurement sequence, be translated to a number of locations of which some are included in the set of locations for which a respective measurement is obtained. However, the beam spot may of course only be translated to locations included in the set of locations during a measurement sequence. Further, the set of locations may be distributed in any way on the sample. Hence, the set of locations may be distributed in any way on the surface of the sample.

By the optical system of the Raman spectroscopy device comprising at least one actuatable component configured to control a location of the beam spot on the sample, the beam spot may be moved to different locations on the sample without having to move the sample and the Raman spectroscopy device in relation to each other. In this way, measurements may be obtained from different locations of the sample without having to move the sample and the Raman spectroscopy device in relation to each other.

By the controller being configured to, during a measurement sequence, cause the at least one actuatable component to translate the beam spot between a set of locations on the sample so as to obtain a measurement from each one of the set of locations on the sample, a plurality of measurements emanating from different locations of the sample may be obtained without having to move the sample and the Raman spectroscopy device in relation to each other. This greatly simplifies operation of the Raman spectroscopy device in contrast to solutions where the sample is moved in relation to the Raman spectroscopy device. In practice, the Raman spectroscopy device may be held with the aperture on or in proximity to the sample during a measurement, meaning that no sample preparation or similar may be required. It may for instance not be necessary to put the sample on some form of holder, stage or similar.

Further, a greater fraction of the sample may be analyzed without having to move the sample and the Raman spectroscopy device in relation to each other. This in turn, results in that the likelihood of determining the presence of a target substance, such as a narcotic or an active pharmaceutical component, in a sample may be significantly increased. Further, the composition of the sample may be determined more accurately.

For instance, illicit street samples of potent narcotics are often diluted to a great extent by non-narcotic filler components or excipients, meaning that the actual narcotic substance or narcotic substances is/are typically only present at some locations of the sample. Thus, by obtaining a measurement from each one of the set of locations on the sample the presence of a narcotic substance may be determined although only present at a single or some locations of the sample. Further, by obtaining a measurement from each one of the set of locations on the sample, the presence of a multitude of different substances or constituents of the sample may be determined although a substance may only be present at a single or some locations of the sample. In this way, the likelihood of determining whether a sample includes an illicit substance or not may be significantly increased.

Further, the active pharmaceutical component or the active pharmaceutical components of a medical preparation, such as a pill or a medicine, is often mixed with one or more excipients or filler components. Thus, by obtaining a measurement from each one of the set of locations on the sample the presence of an active pharmaceutical component may be determined although only present at a single or some locations of the sample. Further, by obtaining a measurement from each one of the set of locations on the sample, the presence of a plurality of different active pharmaceutical components of the sample may be determined although an active pharmaceutical components substance may only present at a single or some locations of the sample. Correspondingly, by obtaining a measurement from each one of the set of locations on the sample, the presence of a plurality of different excipients of the sample may be determined although an excipient may only present at a single or some locations of the sample. In this way, a counterfeit pharmaceutical product may be differentiated from a genuine pharmaceutical product.

Further, by the controller being configured to, during a measurement sequence, cause the at least one actuatable component to translate the beam spot between a set of locations on the sample so as to obtain a measurement from each one of the set of locations on the sample, shortcomings typically encountered when measuring on dark samples, such as black samples, may be significantly reduced. When measuring on a dark sample, the sample may absorb a significant amount of energy from the light source, resulting in an elevated temperature at the sample. Such elevated temperature may result in that the sample is destroyed or otherwise negatively affected, thus negatively affecting the measurement at hand. Further, such elevated temperature may result in that the sample starting to burn, or even explodes in case of an explosive sample. Thus, by translating the beam spot between a set of locations on the sample during a measurement sequence, an elevated temperature of the sample may be counteracted. In this way, measurements on dark samples may be made more accurate. Further, in this way, measurements on dark samples may be made safer.

The set of locations on the sample may correspond to a predetermined measurement pattern, which is advantageous in that a spatial distribution of e.g. a target substance on or in the sample may be determined. Further, it may be ensured that a larger fraction of the sample is analyzed. Furthermore, the likelihood of determining a target substance or substance of interest may be enhanced.

The predetermined measurement pattern may be a two dimensional measurement pattern.

The predetermined measurement pattern may include a component along a first axis of the sample surface and a component along second axis of the sample surface being perpendicular to the first axis. Thus, the predetermined measurement pattern may include X-axis and Y-axis components of a plane defined or partially defined by a surface of the sample.

The predetermined measurement pattern may be a one dimensional measurement pattern, such as a linear measurement pattern.

The controller may be configured to control the at least one actuatable component to cause the beam spot to be stationary for a period of time at each one of the set of locations on the sample while obtaining an associated measurement, which is advantageous in that an accurate measurement may be obtained for each one of the set of locations on the sample. Thus, by having the beam spot stationary for a period of time at each one of the set of locations on the sample while obtaining an associated measurement, it may be ensured that a measurement is made on the same or substantially on the same location of the sample. Thus, the presence of e.g. a target substance in a certain location may be determined. This in turn enables that the composition of the sample over an extended area of the sample may be determined.

The controller may be configured to control the at least one actuatable component to cause the beam spot to move continuously between each one of the set of locations on the sample during a measurement sequence, which is advantageous in that energy from the light source in each one of the set of locations on the sample may be reduced. In this way, shortcomings typically encountered when measuring on dark samples, such as black samples, may be even more reduced. Hence, elevated temperatures destroying or otherwise negatively affecting the sample and hence the measurement at hand may be significantly reduced. Further, the risk of the sample starting to burn or explode may be further reduced.

The controller may be configured to cause the spectrometer to obtain a spectrum from each measurement during a measurement sequence, which is advantageous in that the spatial composition of the sample may be determined. Similarly, the presence of one or more target substances in certain locations on the sample may be determined. This in turn enables that the spatial distribution of one or more target substances on or in the sample may be determined.

The controller may be configured to cause the spectrometer to obtain an averaged spectrum pertaining to the measurements of a measurement sequence, which is advantageous in that an overall composition of the sample may be determined. Similarly, an overall presence of one or more target substances on the sample may be determined. Further, the presence of a highly diluted substance may be determined. Further, the presence of a substance having a low concentration may be determined.

The at least one actuatable component may comprise an adjustable prism, such as a liquid prism, which is advantageous in that the beam spot may be translated between a set of locations on the sample by adjusting the shape of the adjustable prism. Such an adjustable prism may also be referred to as an adjustable wedge. Such an adjustable prism may to advantage be configured to translate the beam spot in two dimensions on the sample. The shape of the adjustable prism may typically be adjusted by altering a voltage applied to the adjustable prism. The controller may be configured to adjust a voltage applied to the adjustable prism.

The at least one actuatable component may comprise at least one tiltable mirror, which is advantageous in that the beam spot may be translated between a set of locations on the sample by tilting the at least one tiltable mirror.

The at least one actuatable component may comprise an optical fiber having an inlet end and an outlet end, wherein the outlet end is translatable relative to the aperture, which is advantageous in that the beam spot may be translated between the set of locations on the sample by translating the outlet end of the optical fiber relative to the aperture.

The sample may comprise a narcotic substance mixed with one or more filler components. The sample may comprise an active pharmaceutical component mixed with one or more excipients. The sample may comprise an explosive or flammable component mixed with one or more filler components.

The Raman spectroscopy device may be a handheld Raman spectroscopy device, which is advantageous in that the device may be used under field conditions. In this way, a quicker identification and/or determination of one or more substances may be enabled. Further, in this way, the need of transferring the sample to the location of the device may be eliminated or kept to a minimum.

According to another aspect of the invention, there is provided a method of performing Raman spectroscopy on a sample using a device according to the first aspect, the method comprising:
arranging the sample in front of the aperture, and
performing a measurement sequence on the sample while the controller causes the at least one actuatable component to translate the beam spot between a set of locations on the sample so as to obtain a measurement from each one of the set of locations on the sample.

In general, features of this aspect provide similar advantages as discussed above in relation to the first aspect. Consequently, said advantages will not be repeated in order to avoid undue repetition.

The method may further comprise:
obtaining measurement data representing a respective spectrum from each measurement of the measurement sequence, or an average spectrum pertaining to the measurements of the measurement sequence, and
determining whether the sample includes a target substance by inputting the measurement data into a data model configured to predict a presence of a target substance in a sample given spectrum data as input.

Thus, by obtaining measurement data representing a respective spectrum from each measurement of the measurement sequence and inputting the measurement data into a data model configured to predict a presence of a target substance in a sample given spectrum data as input it may be determined if the sample from which the measurement data emanates includes a given target substance or given target substances. Such target substances may be any type of substance of interest.

Correspondingly, by obtaining measurement data representing an average spectrum pertaining to the measurements of the measurement sequence and inputting the measurement data into a data model configured to predict a presence of a target substance in a sample given spectrum data as input it may be determined if the sample form which the measurement data emanates includes a given target substance or given target substances.

The data model may by any data model configured to predict the presence of one or more target substances by receiving spectrum data as input. Thus, the data model may be configured to receive any type of spectrum data as input. Such spectrum data may have any suitable format as long as it include information related to one or more spectra.

The method may further comprise:
obtaining measurement data representing a respective spectrum from each measurement of the measurement sequence, or an average spectrum pertaining to the measurements of the measurement sequence, and
determining that the sample includes a target substance by inputting the measurement data into a data model configured to predict a presence of a target substance in a sample given spectrum data as input.

The data model may be configured to predict the presence of one or more target substances. Such target substances may be any type of substance of interest. Such target substances may be illicit substances, narcotic substances, pharmaceutical substances, excipient substances, flammable substances or explosive substances to give a few non-limiting examples.

The data model may comprise a plurality of reference spectra, each reference spectrum corresponding to a respective target substance, and wherein the data model may be configured to determine whether the measurement data matches a reference spectrum of the plurality of refence spectra. Thus, in this way, it may be determined if one or more target substances are included in a sample by determining whether the measurement data obtained from the sample matches one or more reference spectrum of the plurality of refence spectra.

The data model may comprise a plurality of reference spectra, each reference spectrum corresponding to a respective target substance, and wherein the data model may be configured to determine that the measurement data matches a reference spectrum of the plurality of refence spectra. Thus, in this way, it may be determined if one or more target substances are included in a sample by determining that the measurement data emanating from the sample matches one or more reference spectrum of the plurality of refence spectra.

To this end, the data model may include a database comprising spectral data related to one or more target substances. Such a database may include spectra of one or more target substances. Such a database may include numerical values related to spectra of one or more target substances. To this end, such a database may include a set of numerical values for each target substance of the database where the numerical values represent wavelength or frequence locations of Raman peaks related to the associated target substance. Hence, the such a database may include a set of numerical values for each target substance of the database where the numerical values represent Raman shifts related to the associated target substance.

The data model may comprise a neural network trained to predict a presence of a target substance in a sample given spectrum data as input. Thus, in this way, it may be determined if one or more target substances are included in a sample by inputting the measurement data into the neural network.

The neural network may be trained outside of the Raman spectroscopy device and uploaded e.g. to the controller of the device. The neural network may be trained by utilizing ground truth samples including one or more target substances.

The neural network may be trained in the Raman spectroscopy device. To this end, the neural network may e.g. be stored in the controller and trained by measuring on ground truth samples including one or more target substances using the Raman spectroscopy device.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described as such device may vary. It is also to be understood that the terminology used herein is for the purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

Thus, throughout this specification, unless the context requires otherwise, the word "comprise" or variations such as "comprises" or "comprising", will be understood to imply the inclusion of a stated integer or group of integers but not the exclusion of any other integer or group of integers.

### Brief Description of the Drawings

The above and other aspects of the present inventive concept will now be described in more detail, with reference to appended figures showing variants. The figures should not be considered limiting, instead, they are used for explaining and understanding.

As illustrated in the figures, the sizes of layers and regions may be exaggerated for illustrative purposes and, thus, are provided to illustrate the general structures of variants. Like reference numerals refer to like elements throughout.
Fig. 1 is a schematic block diagram of a Raman spectroscopy device.
Fig. 2 is a schematic block diagram of an optical arrangement of the Raman spectroscopy device of Fig. 1.
Figs. 3A and 3B are schematic examples of measurement patterns.
Figs. 4A and 4B are schematic examples of spectra obtained from different locations of a sample.
Fig. 5 is a schematic example of an averaged spectra obtained from a sample.
Fig. 6 is a schematic block diagram of an alternative optical arrangement which may be used in the Raman spectroscopy device of Fig. 1.
Fig. 7 is a flow chart of a method of performing Raman spectroscopy on a sample.

### Detailed description

The present inventive concept will now be described more fully hereinafter with reference to the accompanying drawings, in which currently preferred variants of the inventive concept are shown. This inventive concept may, however, be implemented in many different forms and should not be construed as limited to the variants set forth herein; rather, these variants are provided for thoroughness and completeness, and fully convey the scope of the present inventive concept to the skilled person.

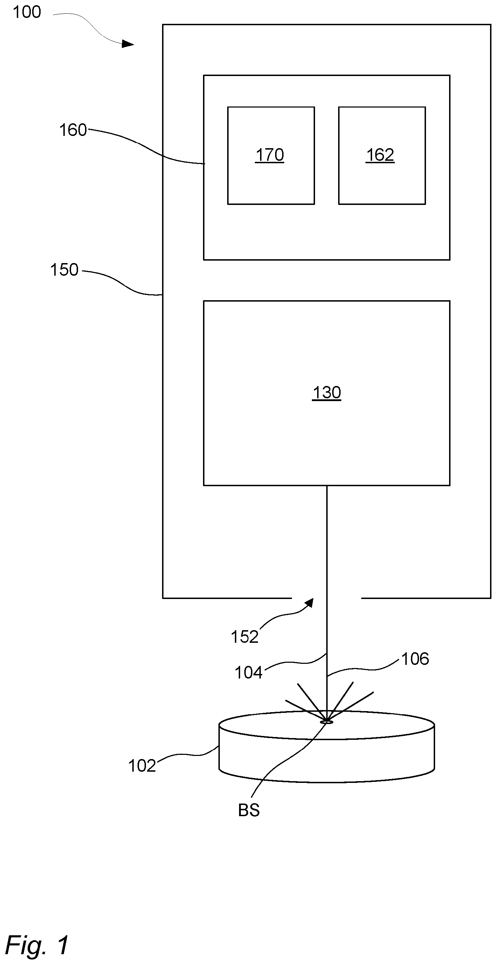

Fig. 1 schematically illustrates a block diagram of an exemplifying spectroscopy system 100 in form of a Raman spectroscopy device 100. The depicted Raman spectroscopy device 100 is designed to analyze in-elastic scattered light 106 from a sample 102. In other words, the depicted Raman spectroscopy device 100 is designed to analyze a Raman contribution in light 106 scattered from the sample 102. Hence, the depicted Raman spectroscopy device 100 includes a spectrometer which may analyze the Raman contribution in light 106 scattered form the sample 102. The sample 102 may for instance be a solid object, a powder, or a liquid to give a few non-limiting examples. The sample 102 may for instance be or include a street sample including an illicit substance, a pharmaceutical composition, a flammable substance or an explosive substance give a few non-limiting examples.

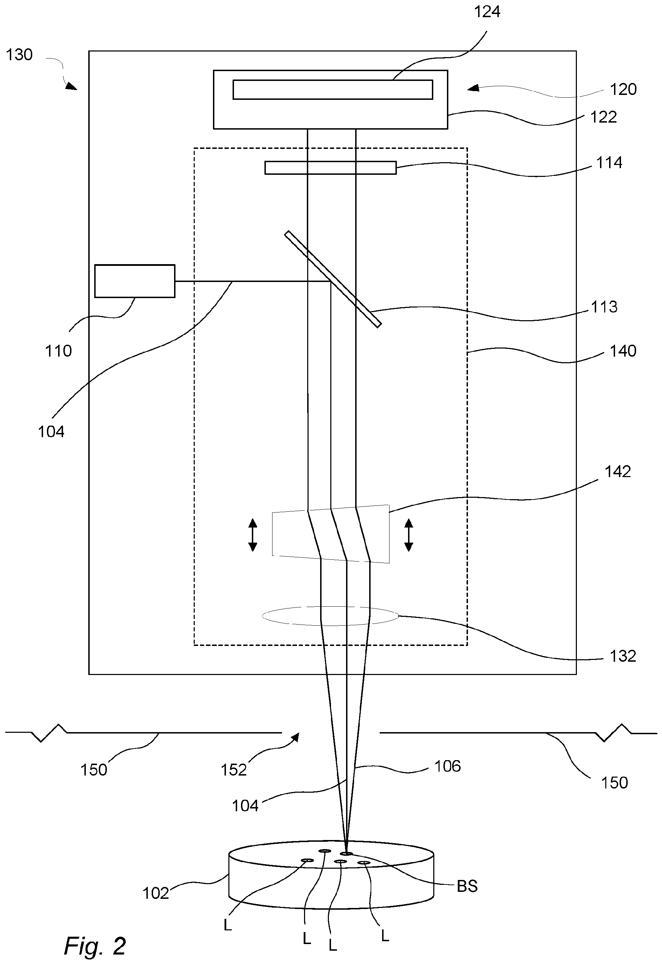

Generally speaking, the Raman spectroscopy device 100 includes an optical arrangement 130 and a controller 160. The controller 160 of Fig. 1 will be elaborated on further after the optical components have been discussed in connection with Fig. 2. The optical arrangement 130 and the controller 160 are connected to each other such that the respective components may communicate and cooperate in order to analyze light 106 scattered from the sample 102. Further, the optical arrangement 130 and the controller 160 are connected to each other such that the controller 160 may control certain components of the optical arrangement 130. The Raman spectroscopy device 100 of Fig. 1 comprises a housing 150. As schematically illustrated in Fig. 1, the components of the Raman spectroscopy device 100 are arranged in the housing 150.

The depicted Raman spectroscopy device 100 is configured to emit light 104 towards the sample 102. More specifically, the optical arrangement 130 is configured to direct light 104 through an aperture 152 of the housing 150 to form a beam spot BS on the sample 102. The emitted light 104 thus interacts with the sample 102 which scatters the light 104. The light 104 thus interacts with the sample 102 which scatters the light 104 elastically and in-elastically, hence resulting in scattered light 106. The scattered light 106 is receivable by the optical arrangement 130 of the depicted spectroscopy system 100. The optical arrangement 130 of the depicted Raman spectroscopy device 100 is consequently configured to emit light 104 and to receive and analyze scattered light 106 received from the sample 102.

The depicted Raman spectroscopy device 100 is designed as a handheld Raman spectroscopy device 100 meaning that the Raman spectroscopy device 100 is suitable to be hand carried and hand operated by an operator of the Raman spectroscopy device 100. Hence the Raman spectroscopy device 100 of Fig. 1 includes its own power source and may consequently be used without any external power. Further, the depicted Raman spectroscopy device 100 is self-sufficient in the sense that the Raman spectroscopy device 100 may operate on its own without requiring a connection to any external entity or data source. However, the present disclosure may be used to advantage in non-handheld Raman spectroscopy devices or systems, such as spectroscopy systems used in laboratories. Moreover, the Raman spectroscopy device 100 may be connected to e.g. the internet to exchange data such as measurement data or data related to firmware updates with external entities.

Now also referring to Fig. 2. Here is conceptually depicted the optical arrangement 130 of Fig. 1. In other words, Fig. 2 conceptually depicts the optical setup of the Raman spectroscopy device 100 in Fig. 1.

The depicted Raman spectroscopy device 100 comprises an electromagnetic radiation source 110 in form of a light source 110. More specifically, the light source 110 of Fig. 2 is a laser 110. The laser 110 of the depicted Raman spectroscopy device 100 emits light at a nominal wavelength of 785 nm. Hence, the laser 110 emits light in a narrow band with a peak intensity at 785 nm. However, other nominal wavelengths may be used to advantage in the Raman spectroscopy device 100.

The Raman spectroscopy device 100 comprises a spectrograph unit 120. The spectrograph unit 120 comprises a spectrometer 122. The spectrometer 122 is configured to analyze a spectral content of light 106 received at an entrance slit of the spectrometer 122. For that reason, a dispersive element of the spectrometer 122 separates the light received at the entrance slit onto a sensor 124 of the spectrometer 122. Hence, light received at the entrance slit is separated based on its wavelength components and received at different portions of the sensor 124. This means that the spectrograph unit 120 may record spectral information by means of the detector 124 of the spectrometer 122. In other words, the spectrometer 122 is configured to record a spectrum of light.

The Raman spectroscopy device 100 comprises an optical system 140. The optical system 140 is arranged in the housing 150. The optical system 140 is configured to direct light 104 emitted by the laser 110, i.e. the light source 110 through the aperture 152 of the housing 150. More specifically, the optical system 140 is configured to form the beam spot BS on the sample 150. The optical system is further configured to direct light 106 received from the sample 102 via the aperture 152 to the spectrometer 122 via a light source rejection component 113.

To this end, the optical system 140 comprises a focusing element 132 configured to focus light 104 from the laser 110 onto the sample 102.

Thus, the laser 110 of the depicted Raman spectroscopy device 100 emits electromagnetic radiation, in the form of monochromatic light having a wavelength of 785 nm, which passes through the focusing element 132. The focused light 104 hits the sample 102 in form of the beam spot BS of focused light. In other words, the laser 110 illuminates a spot of the sample 102 corresponding to the beam spot BS resulting in a scattering of the light 104. The scattered light 106 is collected to reach a slit of the spectrometer 122 and is then received by the detector 124.

The focusing element 132 may comprise one or more lenses. The focusing element 132 may have an adjustable optical power. The focusing element 132 may comprise or be formed of a scanning lens. The focusing element 132 may comprise or be formed of an adjustable lens, such as a liquid lens.

The laser 110 emits light 104, i.e. laser light. The light 104 may be collimated through a laser collimation lens and then propagated through a laser clean up filter which has the purpose of filtering out undesired components of the light 104 emitted by the laser 110. The light 104 is then redirected 90° by the light source rejection component 113. In the depicted Raman spectroscopy device 100, the light source rejection component 113 of the optical system 140 is an interference filter 113. Thus, the interference filter 113 reflects the light 104 emitted by the laser while allowing scattered light 106 of wavelengths other than the laser wavelength to pass. In this way, light from the laser 110 and elastically scattered light is counteracted from teaching the spectrometer 122 by the light source rejection component 113 in form of the interference filter 113. It is however to be understood that other types of light source rejection components 113, such as dichroic mirrors, notch filters, band stop filters or edge filters may be used to advantage.

The light source rejection component 113 in form of the interference filter 113 redirects the light 104 emitted by the laser 110 towards the sample 102. As can be seen in Fig. 2, the light 104 from the laser 110, i.e. the laser beam, is focused into the beam spot BS, i.e. a concentrated spot at the surface of the sample 102, by means of the focusing element 132. The size of the beam spot BS is typically smaller than 20µm in diameter. The size of the beam spot BS may however be altered by adjusting the focusing element 132. In other words, the size of the beam spot BS may be altered by changing a focal length of the focusing element 132.

The light 104 focused on the sample 102 interacts with the molecules of the sample 102. The sample scatters photons of the light 104 elastically and in-elastically. The in-elastically scattered photons include so-called Raman photons. The scattered light 106 propagates trough the focusing element 132 and the light source rejection component 113, i.e. the interference filter 113. The scattered light 106 is then focused onto the entrance slit of the spectrometer 122. As have been explained above, the light source rejection component 113, i.e. the interference filter 113, will predominately allow in-elastically scattered light to pass since such light has a different wavelength as compared to the elastically scattered light which has the same or substantially the same wavelength as the laser 110.

The optical system 140 may, as illustrated in Fig. 2, comprise a long pass filter 114 arranged between the light source rejection component 113 and the spectrometer 122. Such a long pass filer will then serve the purpose of removing wavelengths below a threshold value which is slightly higher than the nominal wavelength of the laser 110. Hence, such a long pass filter 114 will in practice block and thus remove elastically scattered light from the sample 102 which has passed the interference filter 113, while allowing in-elastically scattered Raman light to pass. Hence, in-elastically scattered Raman photons will reach the entrance slit of the spectrometer 122 while elastically scattered Rayleigh photons are counteracted or prevented from reaching the entrance slit of the spectrometer 122 by the interference filter 113 and by the long pass filter 114. Thus, also the long pass filter 114 will act as a light source rejection component 114.

The optical system 140 of the Raman spectroscopy device 100 further comprises an actuatable component 142. The actuatable component 142 of the depicted Raman spectroscopy device 100 is configured to control a location L of the beam spot BS on the sample 102. Thus, the actuatable component is configured to deflect the beam spot BS on the sample 102. Thus, by actuating the actuatable component 142, the location L of the beam spot BS on the sample may be controlled. In other words, the actuatable component 142 may deflect the light 104 exiting the aperture 152 such that the light 104 forming the beam spot BS on the sample 102 impinges different locations L on the sample 102.

In the depicted Raman spectroscopy device 100 of Figs. 1 and 2, the actuatable component 142 is illustrated as comprising an adjustable prism 142. Such an adjustable prism may be a liquid prism. The shape of the adjustable prism 142 may be altered in order to deflect the light 104 exiting the housing 150 via the aperture 152, as schematically illustrated by a pair of double arrows in Fig. 2. In this way, the location L of the beam spot BS on the sample 102 may be controlled. The shape of the liquid prism may be controlled by the controller 160 adjusting a voltage applied to the liquid prism 142. The liquid prism 142 may be configured to control the location L of the beam spot BS in one dimension on the sample 102. The liquid prism 142 may be configured to control the location L of the beam spot BS in two dimensions on the sample 102.

To this end, the controller 160 of the depicted Raman spectroscopy device 100 of Figs. 1 and 2 is configured to, during a measurement sequence, cause the actuatable component 142 in form of the liquid prism 142 to translate the beam spot BS between a set of locations L on the sample 102 so as to obtain a measurement from each one of the set of locations L on the sample 102. Such a set of locations L on the sample 102 is schematically illustrated in Fig. 2. The liquid prism 142 may be configured to translate the beam spot BS a distance of about 1-3 mm along the surface of the sample 102. In practice, the liquid prism 142 may be configured to translate the beam spot BS a distance of about 2 mm along two perpendicular axis at the surface of the sample 102. In this way, a measurement sequence on the sample may cover an area of the sample of about 4 mm². The area of the sample is hence may times greater than the beam spot BS itself which typically has a diameter smaller than 20µm. In this way, a larger portion of the sample may be covered during a measurement sequence as compered to when the beam spot BS is static according to prior art.

It is to be understood that the above numbers relating to the translation of the beam spot BS along the surface of the sample 102 may vary dependent on the optical system 140 used. Further, the above numbers relating to the translation of the beam spot BS along the surface of the sample 102 may vary dependent on the distance between the liquid prism 142 and the sample 102.

Other types of actuatable components may be used in the Raman spectroscopy device 100 of Figs. 1 and 2.

The actuatable component 142 may alternatively, or additionally, comprise at least one tiltable mirror. In this way, the beam spot BS may be translated between a set of locations L on the sample 102 by tilting the at least one tiltable mirror of the actuatable component 142.

As have been described above, the controller 160 of the depicted Raman spectroscopy device 100 of Figs. 1 and 2 is configured to, during a measurement sequence, cause the liquid prism 142 to translate the beam spot BS between a set of locations L on the sample 102. The controller is further configured to cause the spectrometer 122 to obtain a measurement from each one of the set of locations L on the sample 102.

The working distance of the optical system 140 may change as the actuatable component 142 causes the beam spot BS to translate between a set of locations L on the sample 102. This means that the size of the beam spot BS on the sample may change as the as the location L of the beam spot BS on the sample 102 changes. In other words, the beam spot BS may become less focused for some locations L as the liquid prism 142 causes the beam spot BS to translate between a set of locations L on the sample 102. In order to compensate for this, the focal length of the of the focusing element 132 may be varied. Thus, the focal length of the focusing element 132 may be varied as the beam spot BS is translated between the set of locations L on the sample 102 such that the beam spot BS is adequately focused for each location L of the set of locations L on the sample 102. In this regard, the focusing elements 132 may to advantage comprise a liquid lens. The controller 160 may be configured to cause the liquid lens to adjust its optical power of such that the beam spot BS is adequately focused for each location L of the set of locations L on the sample 102. Hence, the controller 160 may be configured to adjust the optical power of the focusing element 132 such that the beam spot BS is adequately focused for each location L of the set of locations L on the sample 102.

Now also referring to Fig. 1, as discussed above, the depicted Raman spectroscopy device 100 comprises a controller 160. The controller 160 may be configured to execute different functions. To this end, the controller 160 may, as illustrated in Fig. 1 comprise a processor 162 configured to execute such different functions. The controller 160 may, as illustrated in Fig. 1, further comprise a memory 170.

The controller 160 may be any type of controller 160 comprising a processing unit 162.

The controller 160 may physically comprise one single device. Alternatively, the controller 160 may be distributed over several devices or components of the Raman spectroscopy device 100, such as over the processor 162 and the memory 170.

The processor 162 of the depicted Raman spectroscopy device 100 is further configured to communicate with other components of the spectroscopy system 100, such as with the memory 170, with the liquid prism 142 and with the sensor 124 of the spectrometer 122.

The processor 162 may be configured to carry out overall control of functions and operations of the Raman spectroscopy device 100. The controller 160 may include a processor 162 in the form of a central processing unit (CPU), a microcontroller, or a microprocessor. The processor 162 of the depicted spectroscopy device is configured to execute program code stored in the memory 170, in order to carry out functions and operations of the controller 160 and hence of the Raman spectroscopy device 100.

The memory 170 may be one or more of a buffer, a flash memory, a hard drive, a removable media, a volatile memory, a non-volatile memory, a random access memory (RAM), or another suitable device. In a typical arrangement of the Raman spectroscopy device 100, the memory 170 may include a non-volatile memory for long term data storage and a volatile memory that functions as system memory for the controller 160. The memory 170 may exchange data with the controller 160 over a data bus. The memory 170 may exchange data with the sensor 124 of the spectrometer 122 over the data bus. Accompanying control lines and an address bus between the memory 170 and the controller 160 also may be present.

Functions and operations of the controller 160 of the Raman spectroscopy device 100 may be embodied in the form of executable logic routines (e.g., lines of code, software programs, etc.) that are stored on a non-transitory computer readable medium (e.g., the memory 170) of the Raman spectroscopy device 100 and are executed by the controller 160 (e.g., using the processor 164). Furthermore, the functions and operations of the controller 160 of the Raman spectroscopy device 100 may be a stand-alone software application or form a part of a software application that carries out additional tasks related to the Raman spectroscopy device 100. The described functions and operations may be considered a method that the corresponding device is configured to carry out. Also, while the described functions and operations may be implemented in software, such functionality may as well be carried out via dedicated hardware or firmware, or some combination of hardware, firmware and/or software.

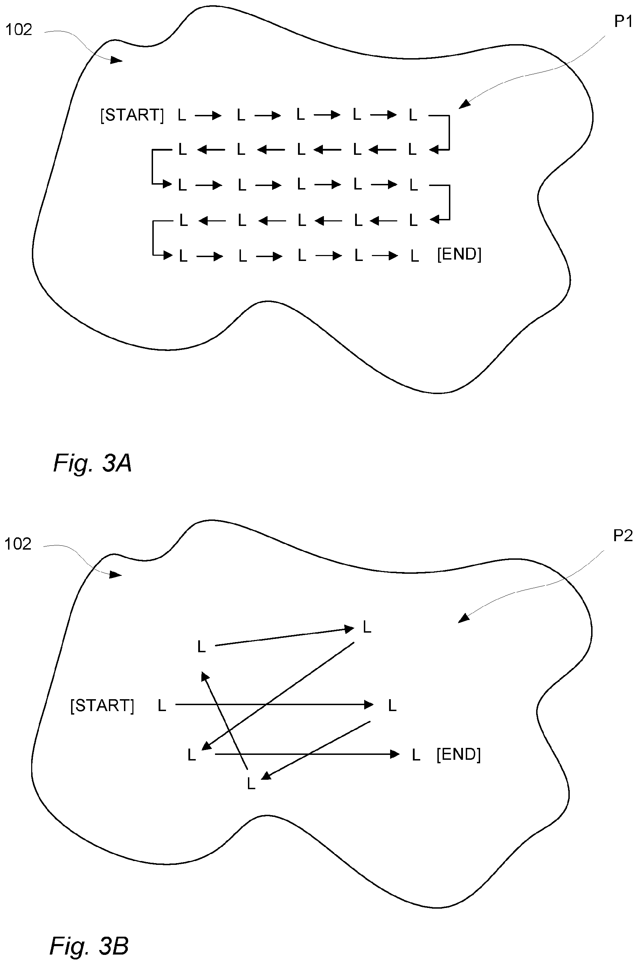

Now turning also to Fig. 3A and 3B. As have been described above, the controller 160 of the depicted Raman spectroscopy device 100 is configured to cause the at least one actuatable component 142, e.g. the adjustable prism 142 of Fig. 2, to translate the beam spot BS between a set of locations L on the sample 102 so as to obtain a measurement from each one of the set of locations L on the sample 102. To this end, the set of locations L on the sample may correspond to a predetermined measurement pattern.

Fig. 3A illustrates an exemplifying measurement pattern P1 in which the beam spot BS is translated between a multitude of locations L while following the arrows indicated in Fig. 3A from start to end. As illustrated in Fig. 3A, the beam sport BS is translated between a set of locations L including 25 individual locations L. The 25 individual locations L are distributed in a two dimensional pattern along two perpendicular directions of the sample 102. Each location L is typically located 25 to 75 µm, such as 50 µm, from a neighboring location L.

Fig. 3B illustrates another exemplifying measurement pattern P2 in which the beam spot BS is translated between a multitude of locations L while following the arrows indicated in Fig. 3B from start to end. As illustrated in Fig. 3B, the beam sport BS is translated between a set of locations L including 7 individual locations L. The 7 individual locations L are distributed in a sparse pattern as compared to the locations L of Fig. 3A. Further, the 7 individual locations L are not distributed along two perpendicular directions of the sample 102. Each location L is typically located 75 to 150 µm, such as 100 µm from a neighboring location L. By measurement pattern P2 a larger area of the sample 102 may be covered in less time as compared to by the measurement pattern P1. However, the measurement pattern P2 will not give as much detailed information regarding the composition of the sample 102 as compared to the measurement pattern P1.

It is however to be understood that any predetermined measurement pattern may be used to advantage. Further, such a predetermined measurement pattern P1, P2 may include any number of measurements, such as 2, 4, 12, 40, 50, 74, 88, 120, 200 or 500 to give a few non limiting examples. Further, such a predetermined measurement pattern P1, P2 may be a one dimensional measurement pattern, such as a linear measurement pattern. Furthermore, such a predetermined measurement pattern P1, P2 may be sparser in one area than in another area of the measurement pattern P1, P2.

The controller 160 of the depicted Raman spectroscopy device 100 may be configured to control the adjustable prism 142 to cause the beam spot BS to be stationary for a period of time at each one of the set of locations L on the sample 102 while obtaining an associated measurement. Thus, the controller 160 may be configured to control the adjustable prism 142 to cause the beam spot BS to be stationary for a period of time at each one of the set of locations L of a measurement pattern, such as the measurement patterns P1, P2 described above in conjunction to Figs. 3A and 3B. To this end, the controller 160 may be configured to supply a constant voltage to the adjustable prism 142 for a period of time such that the beam spot BS becomes stationary while an associated measurement. In this way, it may be ensured that a measurement is made on the same or substantially on the same location L of the sample 102. Thus, the presence of e.g. a target substance in a certain location may be determined. This in turn enables that the composition of the sample 102 over an extended area of the sample 120 may be determined. The beam spot may according to an example be stationary for 500 milliseconds at each location L on the sample.

The controller 160 of the depicted Raman spectroscopy device 100 may be configured to control the at least one actuatable component 142 to cause the beam spot BS to move continuously between each one of the set of locations L on the sample 102 during a measurement sequence. Thus, the controller 160 may be configured to control the adjustable prism 142 to cause the beam spot BS to move continuously between each one of the set of locations L of a measurement pattern, such as the measurement patterns P1, P2 described above in conjunction to Figs. 3A and 3B. To this end, the controller 160 may be configured to supply a varying voltage to the adjustable prism 142 such that the beam spot BS is moved continuously. In this way, it may be counteracted that the sample 102 becomes heated to an undesired temperature. Further, be moving the beam spot BS continuously between each one of the set of locations L on the sample 102 during a measurement sequence, the composition of the sample 102 over an extended area of the sample 120 may be determined.

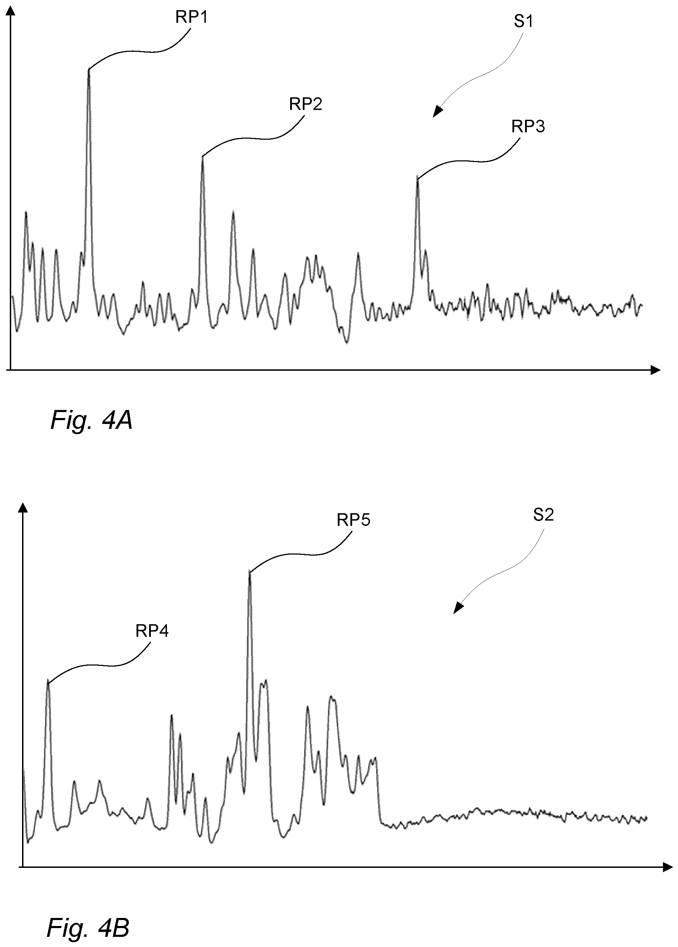

Now turning to Figs. 4A and 4B. Figs. 4A and 4B illustrate a respective spectrum S1, S2 obtained from a same sample 102 at different locations L during a measurement sequence, where the beam spot BS has been stationary at the location L where the associated spectrum S1, S2 has been obtained. Thus, Fig. 4A is a spectrum obtained from a first location L of a sample 102 and Fig. 4B is a spectrum obtained from a second location L of the very same sample 102. The X-axis of Figs. 4A and 4B represents a Raman shift (in an arbitrary scale). The Y-axis indicates the number of counts of the sensor 124 of the spectrometer 122 (in an arbitrary scale).

In practice, the controller 160 of the depicted Raman spectroscopy device 100 may be configured to cause the spectrometer 122 to obtain a spectrum S1, S2 from each measurement during a measurement sequence. Hence, the controller 160 may be configured to cause the spectrometer 122 to obtain a multitude of spectra S1, S2 during a measurement sequence, although only two spectra S1, S2 from the same sample 102 are illustrated in Figs. 4A and 4B respectively.

The spectra S1 and S2 are both obtained from a sample 102 in the form of a morphine tablet. The morphine tablet includes lactose monohydrate as an excipient or filler material. The amount of lactose monohydrate in the morphine tablet exceeds the amount of morphine by far. This means that analyzing a morphine tablet is generally very hard since the overall Raman response of the morphine is typically very weak as compared to the overall Raman response of the lactose monohydrate. Thus, in a state of the art single measurement the morphine spectrum is highly likely to be overshadowed by the stronger Raman scattering and higher abundancy of lactose monohydrate. However, by translating the beam spot BS between a set of locations L on the sample 102 as have been described above, and to obtain a measurement from each one of the set of locations L on the sample 102, it is possible to find locations L or regions richer in morphine that will give rise to the spectrum S1 with sufficient Raman information to allow identification of the morphine present in the sample 102, i.e. in the morphine tablet.

The spectrum S1 of Fig. 4A clearly illustrates the presence of morphine. More specifically, the spectrum S1 has strong signals at the Raman peaks RP1, RP2 and RP3, corresponding to Raman shifts of 630, 970 and 1620 cm⁻¹ respectively, which are characteristic for morphine sulphate. As is known int the art, a Raman shift of a Raman peak refers to a wavelength difference between an excitation wavelength and a wavelength of the light source 110.

Correspondingly, the spectrum S2 of Fig. 4B clearly illustrates the presence of lactose monohydrate. More specifically, the spectrum S2 has strong signals at the Raman peaks RP4 and RP5, corresponding to Raman shifts of 480 and 1090 cm⁻¹ respectively, which are characteristic for lactose monohydrate.

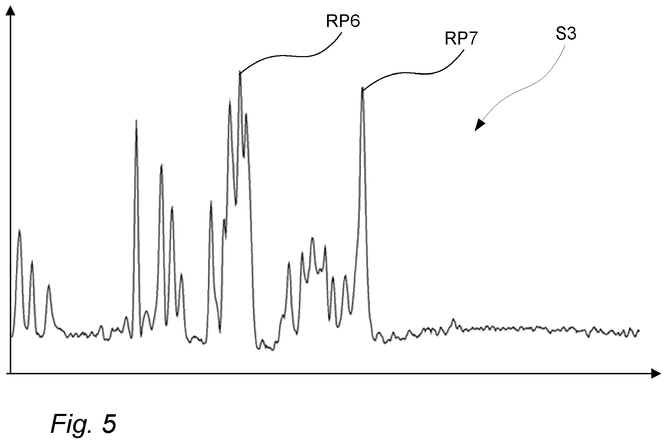

Now turning to Fig. 5. Fig. 5 illustrates a spectrum S3 obtained from a sample 102. The spectrum S3 is an averaged spectrum S3 from a measurement sequence during which the beam spot BS has been continuously moved between a set of locations L, such as the locations L of the measurement patterns P1 and P2 described above. Hence, in practice, the controller 160 of the depicted Raman spectroscopy device 100 may be configured to cause the spectrometer 122 to obtain an averaged spectrum S3 pertaining to the measurements of a measurement sequence. Hence, the controller 160 may be configured to cause the spectrometer 122 to obtain an averaged spectrum S3 from a multitude of locations L of the sample 102 during a measurement sequence. The X-axis of Fig. 5 represents a Raman shift (in an arbitrary scale). The Y-axis indicates the number of counts of the sensor 124 of the spectrometer 122 (in an arbitrary scale).

The spectrum S3 is obtained from a solid sample 102 comprising hexamine and xylitol as substances. In practice, the spectrum S3 comprises spectrum peaks or details pertaining to both hexamine and xylitol. However, although both hexamine and xylitol give rise to certain peaks in the spectrum S3, the spectrum S3 clearly illustrates the presence of both hexamine and xylitol. More specifically, the spectrum S3 has strong signals around at the Raman peak RP6 corresponding to a Raman shift of 780 cm⁻¹ which is characteristic for hexamine. Correspondingly, the spectrum S3 has a strong signal around at the Ramn peak RP7 corresponding to a Raman shift of 1460 cm⁻¹ which is characteristic for xylitol. Thus, the presence of more than one target substance may be determined by obtaining an averaged spectrum from a plurality of locations L on a sample.

As have been described above, the depicted Raman spectroscopy device 100 may to advantage be used on samples 102 comprising a narcotic substance mixed with one or more filler components. The depicted Raman spectroscopy device 100 may to advantage be used on samples 102 comprising an active pharmaceutical component mixed with one or more excipients. The depicted Raman spectroscopy device 100 may to advantage be used on samples 102 comprising an explosive or flammable component mixed with one or more filler components.

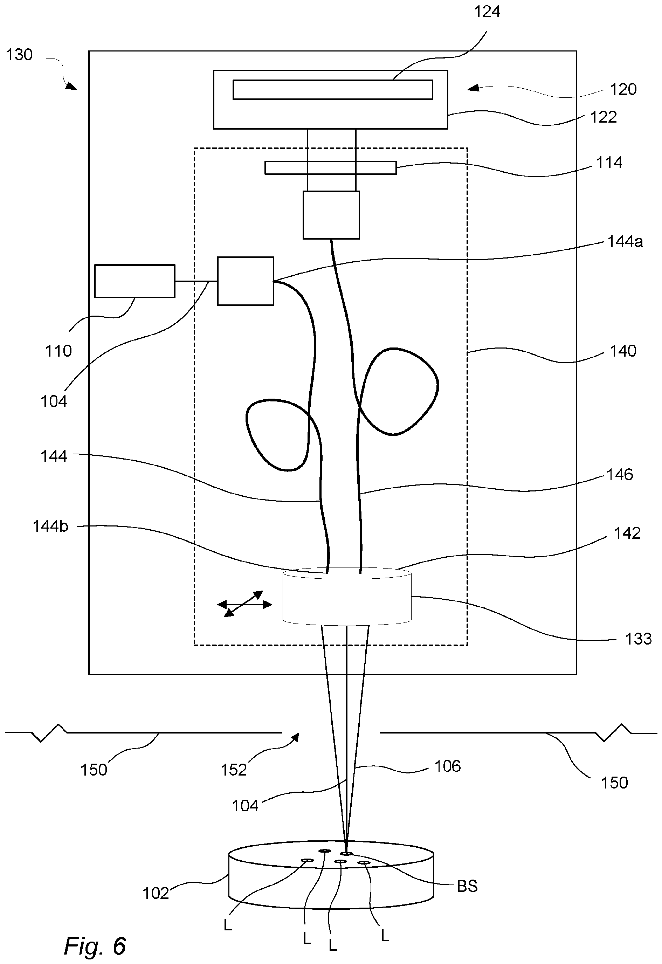

Now turning to Fig. 6. Fig 6 conceptually depicts an optical arrangement 130 which may be used in the Raman spectroscopy device 100 of Fig. 1. The optical arrangement 130 of Fig. 6 is similar to the optical arrangement 130 of Fig. 2. Given the similarities, only differences between the optical arrangement 130 of Fig. 6 and the optical arrangement 130 of Fig. 2 will be described below. In the optical arrangement 130 of Fig. 6, the optical system 140 has a different design as compared to the optical system 140 of Fig. 2.

The depicted optical system 140 of Fig. 6 comprises an actuatable component 142 like the optical system 140 of Fig. 2. However, the actuatable component 142 of Fig. 6 comprises an optical fiber 144. The optical fiber 144 has an inlet end 144a and an outlet end 144b. The outlet end 144b of the optical fiber 144 is translatable relative to the aperture 152. In this way, the location L of the beam spot BS on the sample 102 may be controlled by translating the outlet end 144b of the optical fiber 144 relative to the aperture 152. Thus, light 104 emitted by the laser 110, i.e. the light source 110, is conveyed and directed through the aperture152 of the housing 150 via the optical fiber 144 as illustrated in Fig. 6.

Further, as illustrated in Fig. 6, the optical system 140 may comprise focusing optics 133. The focusing optics 133 may comprise one or more focusing elements, such as the focusing element 132 of Fig. 2. The focusing optics 133 may comprise a light source rejection component, such as the light source rejection component 113 of Fig. 2. The focusing optics 133 may, as illustrated in Fig. 6 further be used to collect scattered light 106 which is scattered from the sample 102. The scattered light 106 is collected to reach a slit of the spectrometer 122 and is then received by the detector 124. To this end, a further optical fiber 146 may be provided in the optical system 140. The further optical fiber 146 may, as illustrated in Fig. 6 be connected between the focusing optics 133 and the spectrometer 122. In this way, scattered light 106 may be collected by focusing optics 133 and directed to the reach a slit of the spectrometer 122 by the further optical fiber 146. This means that the optical fiber 144 and the further optical fiber 146 will bend and flex as the actuatable component 142 translates the outlet end 144b of the optical fiber jointly with an input end of the further optical fiber 146.

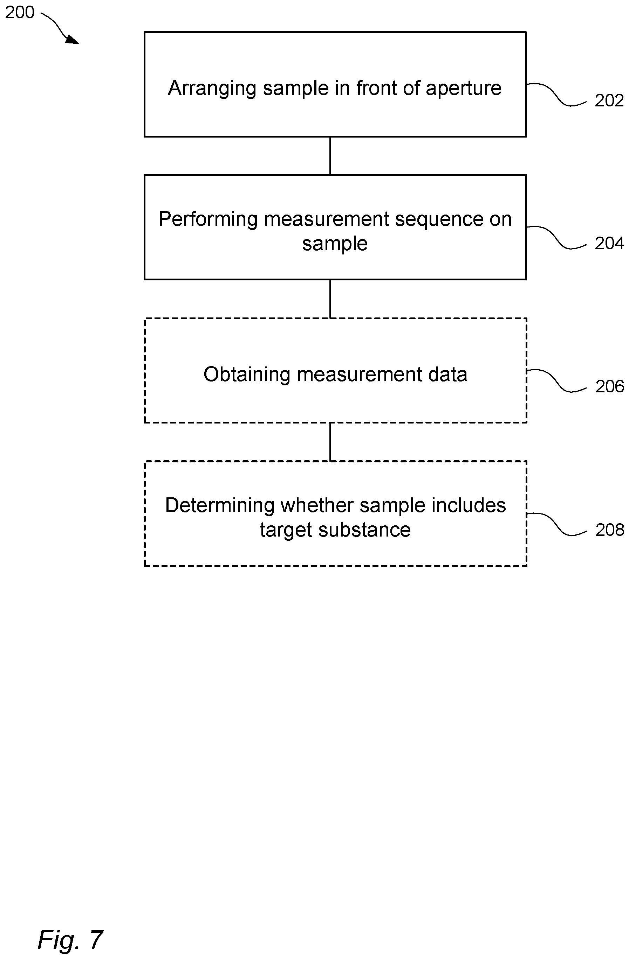

Now turning to Fig. 7. Fig 7 is a flow chart of a method 200 of performing Raman spectroscopy on a sample 102 using a Raman spectroscopy device 100 of the above described kind. The method 200 comprises arranging 202 the sample 102 in front of the aperture 152. Thus, the sample 102 may be arranged in front of the aperture 152 by putting the sample 102 in front of the aperture. Thus, the sample 102 may be arranged in front of the aperture 152 by moving the Raman spectroscopy device 100 to the sample 102 such that that the sample is in front of the aperture 152.

The method 200 proceeds by performing 204 a measurement sequence on the sample 102 while the controller 160 causes the at least one actuatable component 142 to translate the beam spot BS between a set of locations L on the sample 102 so as to obtain a measurement from each one of the set of locations L on the sample 102. In this way, a plurality of measurements may be obtained from different locations L of the sample in the same measurement sequence as have been described above.

The method 200 may further comprise obtaining 206 measurement data representing a respective spectrum from each measurement of the measurement sequence, or an average spectrum pertaining to the measurements of the measurement sequence. To this end, measurement data in any suitable format may be obtained as long as the measurement data represents a respective spectrum from each measurement of the measurement sequence, or an average spectrum pertaining to the measurements of the measurement sequence. As have been explained above in conjunction with Figs. 3A to 4B, a spectrum may be obtained from each measurement the measurement sequence. Thus, a respective spectrum, such as the spectra S1 and S2 of Figs. 4A and 4B, may be obtained from each location L of the set of locations L. It is however to be understood that the measurement data as such must not be a spectrum or data form which a spectrum may be drawn. The measurement data may as an example include data indicative of Raman shifts, i.e. locations of Raman peaks. Hence, the measurement data may represent a spectrum by a table or a vector. The measurement data may as an example include data indicative of Raman shifts, i.e. locations of Raman peaks, and the respective intensities of the Raman peaks, i.e. the height of the Raman peaks. Hence, the measurement data may represent a spectrum by a table or matrix. However, the measurement data may represent a spectrum by a graphical representation thereof. The measurement data may represent a spectrum by a table enabling plotting of an associated spectrum.

The method may comprise determining 208 whether the sample 102 includes a target substance by inputting the measurement data into a data model configured to predict a presence of a target substance in a sample 102 given spectrum data as input. Thus, the measurement data of the above described kind may be inputted in a data model and the data model may predict if the sample 102 includes a target substance based on the inputted measurement data. As have been described above, such target substance or target substances are typically a substance of interest which is searched for in the sample 102, such as an illicit narcotic substance in a street sample or an active pharmaceutical component in a tablet or pill.

To this end, the data model may be any type of suitable data model which is configured to predict the presence of a target substance in a sample 102 given spectrum data as input. In other words, the data model may be any type of suitable data model which is configured to or capable of predicting or determining if the sample 102 includes a target substance based on the inputted measurement data.

The data model may comprise a plurality of reference spectra where each reference spectrum corresponds to a respective target substance, and wherein the data model is configured to determine whether the measurement data matches a reference spectrum of the plurality of refence spectra. Such matching by the data model may be made in any suitable way. The data model may compare the inputted measurement data to the refence spectra of the data model and determine that a matching is at hand if the inputted measurement data is sufficiently similar to a refence spectrum of the refence spectra. Such a matching may be made in a plurality of ways.

Such a matching may be made by the data model determining one or more Raman peaks, such as the Raman peaks RP1, RP2 and RP3 of Fig. 4A. The identification of the Raman peaks may be made by thresholding. In this way data which does not exceed a predetermined threshold may be removed or disregarded. In practice, any measurement data not corresponding to a Raman peak of a certain height or strength may be disregarded. The data model may then determine the actual Raman shifts of the Raman peaks selected via the thresholding. The data model may then compare the determined Raman shift or Raman shifts against a database of the data model comprising entries correlating substances with information associated with Raman shifts of the substances. In this way, the data model may determine whether the measurement data matches a reference spectrum of the plurality of refence spectra, thereby predicting or identifying the presence of a target substance in the sample 102. Such a database preferably comprises a relatively speaking large number of target substances or substances of interest, where each target substance being associated with certain properties, such as wavelengths of characterizing Raman peaks of the substance, relative intensities between Raman peaks, etc. A target substance in the database is thereby associated with a "fingerprint" for possible matching with a substance for which the Raman spectroscopy device 100 has obtained measurement data during a measurement sequence.

Alternatively, or additionally, the data model may use a different type of peak finding algorithm to find or identify Raman peaks in inputted measurement data, i.e. spectrum data.

Alternatively, or additionally, the data model may match the inputted measurement data by determining a metric associated with the inputted measurement data, i.e. spectrum data, and determining a distance to a corresponding metric associated with the refence spectra in a feature space. Thus, the data model may determine that a match with a target substance is at hand when the metric associated with the inputted measurement data is sufficiently close to the corresponding metric of a target substance in the feature space. Such metric associated with the inputted measurement data may be a multidimensional metric, a three, a two or one dimensional metric.

Alternatively, or additionally, the data model may comprise a neural network trained to predict a presence of a target substance in a sample given spectrum data as input. In other words, the data model may comprise any type of suitable neural network which is trained to predict or determine if the sample 102 includes a target substance based on the inputted measurement data. i.e. spectrum data. To this end, the neural network may be trained outside of the device 100 and uploaded to the memory 170 of the controller 160 of the Raman spectroscopy device 100. Alternatively, the neural network may be trained in the device 100. Also, according to this design, the neural network may be stored in the memory 170 of the controller 160 of the Raman spectroscopy device 100.

Such a neural network may be trained by utilizing ground truth samples including one or more target substances, this irrespective of whether the neural network is trained in or outside of the Raman spectroscopy device 100.

The neural network may comprise a convolutional neural network, CNN. The neural network may comprise a dense convolutional neural network.

It will be appreciated that the present inventive concept is not limited to the variants and examples shown. Several modifications and variations are thus conceivable within the scope of the invention which thus is defined by the appended claims.

## Claims

1. A Raman spectroscopy device (100) comprising:
a housing (150),
a controller (160) arranged in the housing (150),
a light source (110) arranged in the housing (150),
a spectrometer (122) arranged in the housing (150), and
an optical system (140) arranged in the housing (150) and configured to direct light (104) emitted by the light source (110) through an aperture (152) of the housing (150) to form a beam spot (BS) on a sample (102), and to direct light (106) received from the sample (102) via the aperture (152) to the spectrometer (122) via at least one light source rejection component (113, 114),
wherein the optical system (140) comprises at least one actuatable component (142) configured to control a location (L) of the beam spot (BS) on the sample (102), wherein the controller (160) is configured to, during a measurement sequence, cause the at least one actuatable component (142) to translate the beam spot (BS) between a set of locations (L) on the sample (102) so as to obtain a measurement from each one of the set of locations (L) on the sample (102).

2. The Raman spectroscopy device (100) according to claim 1, wherein the set of locations (L1) on the sample (102) corresponds to a predetermined measurement pattern (P1, P2).

3. The Raman spectroscopy device (100) according to claim 1 or 2, wherein the controller (160) is configured to control the at least one actuatable component (142) to cause the beam spot (BS) to be stationary for a period of time at each one of the set of locations (L) on the sample (102) while obtaining an associated measurement.

4. The Raman spectroscopy device (100) according to claim 1 or 2, wherein the controller (160) is configured to control the at least one actuatable component (142) to cause the beam spot (BS) to move continuously between each one of the set of locations (L) on the sample (102) during a measurement sequence.

5. The Raman spectroscopy device (100) according to any one of the preceding claims, wherein the controller (160) is configured to cause the spectrometer (122) to obtain a spectrum (S1, S2) from each measurement during a measurement sequence.

6. The Raman spectroscopy device (100) according to any one of claims 1-4, wherein the controller (160) is configured to cause the spectrometer (122) to obtain an averaged spectrum (S3) pertaining to the measurements of a measurement sequence.

7. The Raman spectroscopy device (100) according to any one of the preceding claims, wherein the at least one actuatable component (142) comprises an adjustable prism (142), such as a liquid prism.

8. The Raman spectroscopy device (100) according to any one of the preceding claims, wherein the at least one actuatable component (142) comprises at least one tiltable mirror.

9. The Raman spectroscopy device (100) according to any one of the preceding claims, wherein the at least one actuatable component (142) comprises an optical fiber (144) having an inlet end (144a) and an outlet end (144b), wherein the outlet end (144b) is translatable relative to the aperture (152).

10. The Raman spectroscopy device (100) according to any one of the preceding claims, wherein the sample (102) comprises a narcotic substance mixed with one or more filler components, wherein the sample (102) comprises an active pharmaceutical component mixed with one or more excipients, or wherein the sample (102) comprises an explosive or flammable component mixed with one or more filler components.

11. A method (200) of performing Raman spectroscopy on a sample (102) using a device (100) according to any one of the preceding claims, the method (200) comprising:
arranging (202) the sample (102) in front of the aperture (152), and
performing (204) a measurement sequence on the sample (102) while the controller (160) causes the at least one actuatable component (142) to translate the beam spot (BS) between a set of locations (L) on the sample (102) so as to obtain a measurement from each one of the set of locations (L) on the sample (102).

12. The method (200) according to claim 11, wherein the method (200) further comprises:
obtaining (206) measurement data representing a respective spectrum (S1, S2) from each measurement of the measurement sequence, or an average spectrum (S3) pertaining to the measurements of the measurement sequence, and
determining (208) whether the sample (102) includes a target substance by inputting the measurement data into a data model configured to predict a presence of a target substance in a sample (102) given spectrum data as input.

13. The method (200) according to claim 12, wherein the data model comprises a plurality of reference spectra, each reference spectrum corresponding to a respective target substance, and wherein the data model is configured to determine whether the measurement data matches a reference spectrum of the plurality of refence spectra.

14. The method (200) according to claim 12, wherein the data model comprises a neural network trained to predict a presence of a target substance in a sample given spectrum data as input.
